# EUROPÄISCHE PATENTSCHRIFT

(11) **EP 0 737 544 B1**
(45) Veröffentlichungstag und Bekanntmachung des Hinweises auf die Patenterteilung: **30.12.1998**
(21) Anmeldenummer: 96105483.0
(22) Anmeldetag: 04.04.1996
(51) Int. Cl.: B23Q 39/02

(54) **Werkzeugmaschine mit mehreren Spindeln**
Machine tool with multiple spindles
Machine-outil avec plusieurs broches

(30) Priorität: 13.04.1995 DE 19514058
(43) Veröffentlichungstag der Anmeldung: 16.10.1996
(73) Patentinhaber: EMAG-MASCHINEN VERTRIEBS- und SERVICE GmbH, D-73084 Salach (DE)
(72) Erfinder: Hessbrüggen, Norbert, 73107 Eschenbach (DE); Steinbach, Heinz, 89079 Ulm (DE)
(74) Vertreter: Zmyj, Erwin, Dipl.-Ing., Dipl.-Wirtsch.-Ing.

(56) Entgegenhaltungen:
- DE-A-19 516 774
- DE-U- 8 700 343
- DE-U- 8 711 148
- US-A- 4 197 769
- US-A- 5 105 694

## Beschreibung

Die Erfindung bezieht sich auf eine Werkzeugmaschine mit einem Maschinengrundkörper und mehreren Spindeln für die gleichzeitige oder unterschiedliche, getrennte Bearbeitung mehrerer Werkstücke.

Eine derartige Werkzeugmaschine ist beispielsweise in DE 8700343 U beschrieben, die dem Oberbegriff entspricht. Es ist bekannt, Werkzeugmaschinen mit mehreren antreibbaren Spindeln auszuführen, wobei die Spindelachsen horizontal liegen und jeder Spindel ein getrennt verfahrbarer Kreuzschlitten mit Werkzeugrevolver zugeordnet ist. Bei diesen Werkzeugmaschinen sind die Spindeln fest angeordnet und sämtliche Zustellbewegungen bei der Bearbeitung von Werkstücken werden über den jeweiligen, den Werkzeugrevolver tragenden Kreuzschlitten ausgeführt. Für das Beladen dieser Spindeln ist ein gesondertes Ladesystem erforderlich. Außerdem bedingt die Zuordnung jeweils eines Werkzeugrevolvers auf einem Kreuzschlitten zu jeder Arbeitsspindel einen entsprechenden Raumbedarf, so daß diese Maschinen, abgesehen von vielen anderen Nachteilen einen verhältnismäßig großen Platzbedarf haben. Andere Nachteile bestehen in der Notwendigkeit für ein gesondertes Ladesystem, im ungünstigen Spänetransport und im aufwendigen Aufbau der Kreuzschlitten mit ihren Führungen sowie den hierfür notwendigen Steuerungen. Viele dieser Nachteile haben zu der Entwicklung von Werkzeugmaschinen mit motorgetriebenen Vertikalspindeln geführt, die im Pick-up-Verfahren arbeiten und damit ohne zusätzliches Ladesystem auskommen. Weiterhin gestaltet sich der Späneabtransport wesentlich einfacher als bei horizontal liegenden Spindeln. Wenn man hier bei solchen Vertikalspindeln aufweisenden Maschinen die Arbeitsleistung steigern wollte, so könnte man dies üblicherweise nur dadurch erreichen, daß man mehrere solcher Einheiten nebeneinander, gegebenenfalls ebenso wie bei den horizontal liegenden Mehrspindlern, auf einem Maschinengrundkörper anordnet. Dies würde aber ebenso wie bei den horizontalen Mehrspindlern die Anordnung mehrerer selbständig verfahrbarer Werkzeughalter auf Kreuzschlitten bedingen, so daß auch hier der Platzbedarf sehr groß wäre.

Aufgabe der Erfindung ist es, eine flexibel einsetzbare, für die gleichzeitige oder unterschiedliche, getrennte Bearbeitung von Werkstücken geeignete Werkzeugmaschine zu schaffen, bei der die Arbeitsleistung durch mehrere Arbeitsspindeln gesteigert werden kann, ohne daß der Platzbedarf proportional zur Erhöhung der Spindelzahl ansteigt.

Diese Aufgabe wird ausgehend von einer Werkzeugmaschine der eingangs erläuterten Art erfindungsgemäß dadurch gelöst, daß mindestens zwei um ihre Drehachsen antreibbare und in ihre Achsrichtung verfahrbare Spindeln in unmittelbar gegeneinander abgestützten, in einer senkrecht zur Verfahrrichtung der Spindeln stehenden Richtung gemeinsam oder relativ zueinander verfahrbaren, einen Gesamtschlitten bildenden Teilschlitten aufgenommen sind und daß nur der Gesamtschlitten durch eine Führungsanordnung auf dem Maschinengrundkörper geführt ist.

Durch die gemeinsame Verfahrbarkeit der zu einer Einheit zusammengefaßten Mehrfachanordnung von Spindeln und die Möglichkeit der gegenseitigen Relativverschiebung, werden zahlreiche Vorteile erzielt. Ein wesentlicher Vorteil besteht darin, daß die Spindeln relativ gedrängt nebeneinander angeordnet und trotzdem gemeinsam oder unabhängig voneinander zur Ausführung einer Zustellbewegung oder zur Durchführung einer Korrektureinstellung verfahren werden können. Weiterhin ist es beispielsweise möglich zwei oder mehreren Spindeln einem einzigen, als Mehrfachrevolver ausgebildeten Werkzeugträger zuzuordnen, der wegen der zweiachsigen Verfahrbarkeit der Spindeln ortsfest angeordnet sein kann, wodurch die Mehrfachanordnung von jeweils zweiachsig bewegbaren Schlitten für die Werkzeughalter entfallen kann. Die gemeinsame Bearbeitung mehrerer Werkstücke mittels eines einzigen feststehenden Werkzeugrevolvers wird dadurch ermöglicht, daß Maßabweichungen zwischen den Werkzeugschneiden und den jeweiligen Spindelachsen durch die relative Verschiebbarkeit der Spindeln untereinander korrigiert werden können. Diese Maßnahmen ermöglichen beispielsweise den Bau einer Zweispindelmaschine, die von der Grundfläche nur wenig mehr Platz als eine einspindlige Maschine benötigt und der bauliche Aufwand gegenüber zwei zusammengefaßten Einzelmaschinen wesentlich verringert ist. Somit kann die Arbeitsleistung einer solchen Werkzeugmaschine gegenüber einer einspindligen Maschine bei geringfügig höherem Platzbedarf und geringfügig höherem baulichem Aufwand verdoppelt werden. Dies senkt nicht nur die Investitionskosten bezüglich der Werkzeugmaschine, sondern auch in erheblichem Maße die Investitionskosten für die Bereitstellung der notwendigen Grundfläche und die hierbei notwendigen Gebäude. Außerdem werden die Transportwege zwischen den einzelnen Maschinen einerseits und zu den entsprechenden Lagerstellen für das Rohmaterial, die fertigen Werkstücke und die möglicherweise außerhalb der Maschinen zur Vorratshaltung gelagerten Werkzeugen sowie den Späneabtransport verringert, was die Transportkosten und den insgesamt notwendigen Zeitaufwand für die Bearbeitung von Werkstücken senkt. Somit werden nicht nur die Investitionskosten für die Werkzeugmaschinen selbst, sondern auch für die Fabrikationshallen und die notwendigen Transporteinrichtungen gesenkt. Durch die Möglichkeit der Relativverschiebung der die Spindeln tragenden Teilschlitten können sowohl synchrone Bearbeitungen mehrerer Werkstücke als auch die unabhängige Bearbeitung der Werkstücke erfolgen.

Eine besonders vorteilhafte Ausgestaltung der Erfindung besteht darin, daß die Führungsanordnung für den Gesamtschlitten zwei Linearführungen und zugeordnete Führungswagen aufweist und die Teilschlitten gegeneinander durch in vertikaler Richtung mit Abstand zueinander angeordnete Stützführungen abgestützt sind. Bei dieser Ausgestaltung weist eine aus zwei oder mehreren Spindeln aufgebaute Einheit nur zwei Linearführungen auf, wie sie für die Führung eines, eine einzige Spindel tragenden Schlitten erforderlich sind, wobei die relative Verschiebbarkeit der einzelnen Teilschlitten durch die Stützführungen ermöglicht wird, die zwischen den Teilschlitten vorgesehen sind. Die Führungsanordnung für den Gesamtschlitten umfaßt also zwei jeweils den abgewandten Außenseiten des Gesamtschlittens zugeordnete Linearführungen und diesen zugeordnete, am Gesamtschlitten angeordnete Führungswagen.

Die Stützführungen können in weiterer Ausgestaltung der Erfindung jeweils zwei Linearführungen und diesen zugeordnete Führungswagen umfassen.

In vorteilhafter Weise ist jedem Teilschlitten eine gesonderte Antriebseinheit zugeordnet, die über eine Steuereinheit gemeinsam und synchron oder getrennt voneinander ansteuerbar sind.

Die Relativverschiebung der Teilschlitten zur Korrektureinstellung erfolgt dabei in Abhängigkeit von der durch ein Meßsystem festgestellten Maßabweichung zwischen den Spindelachsen und den zugeordneten Werkzeugschneiden.

Die Vorteile der getrennten und einfachen Bauweise lassen sich insbesondere dann erreichen, wenn die Spindeln als Motorspindeln ausgebildet sind, bei denen der Rotor unmittelbar auf der Spindelwelle und der Stator im Spindelgehäuse angeordnet ist und die Spindeln jeweils einen eigenen Antrieb für das Verfahren in Richtung ihrer Achse aufweisen, wobei eine Steuereinrichtung vorgesehen ist, die ein gemeinsames, synchrones Verfahren beider Spindeln oder eine Relativverschiebung zur Durchführung einer Korrektureinstellung oder einer Zustellbewegung ermöglicht.

Gemäß einer vorteilhaften Weiterbildung der Erfindung sind die Spindeln als Vertikalspindeln ausgeführt. Hierdurch können bei Anwendung des Pick-up-Verfahrens die Vorteile hinsichtlich der Einsparung eines Ladesystems und hinsichtlich des besseren Späneabtransportes genutzt werden. Die Anordnung der Spindeln unter jedem beliebigen Winkel bis hin zur horizontalen Anordnung ist deshalb nicht ausgeschlossen.

Je nach Bedarf können die Spindeln zur Aufnahme von Werkstücken, wobei in diesem Falle jeder beliebige Werzeugträger auf dem Maschinengrundkörper angeordnet ist, oder zur Aufnahme von Werkzeugen dienen, wobei im letzteren Falle jeder beliebige Werkstückträger auf dem Maschinengrundkörper angeordnet ist.

Die Erfindung wird nachfolgend anhand eines in der Zeichnung dargestellten Ausführungsbeispieles näher erläutert. In der Zeichnung zeigen:
- **Figur 1:**: eine Seitenansicht einer Werkzeugmaschine;
- **Figur 2:**: eine Vorderansicht der Werkzeugmaschine nach Figur 1;
- **Figur 3:**: eine Draufsicht auf diese Werkzeugmaschine und
- **Figur 4:**: eine Vorderansicht der Schlittenanordnung.

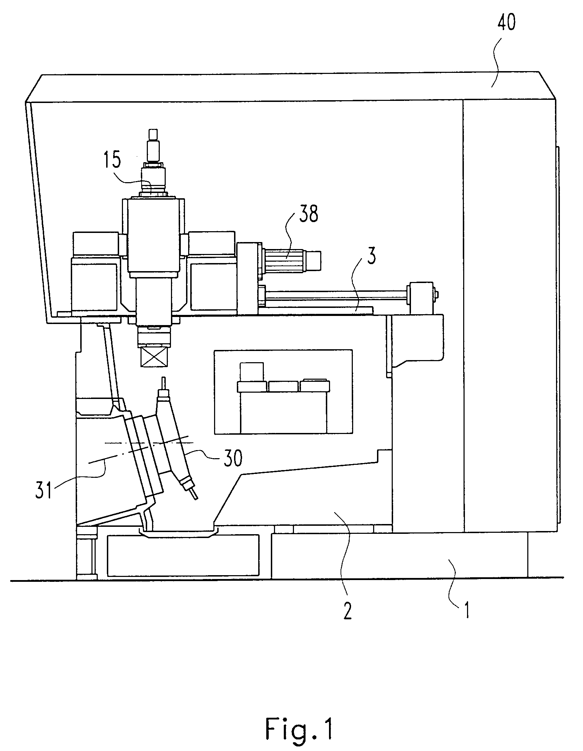

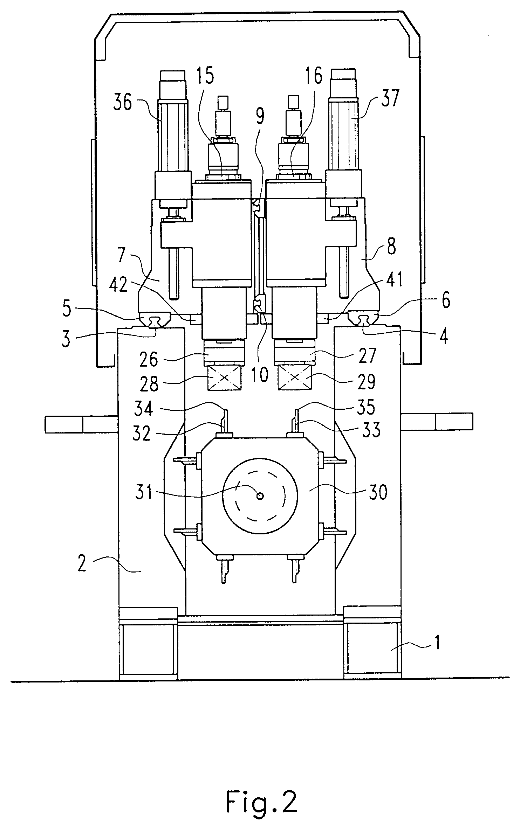

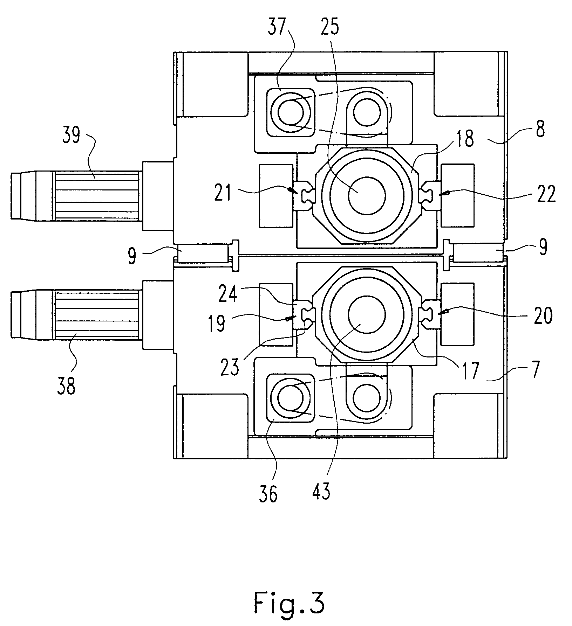

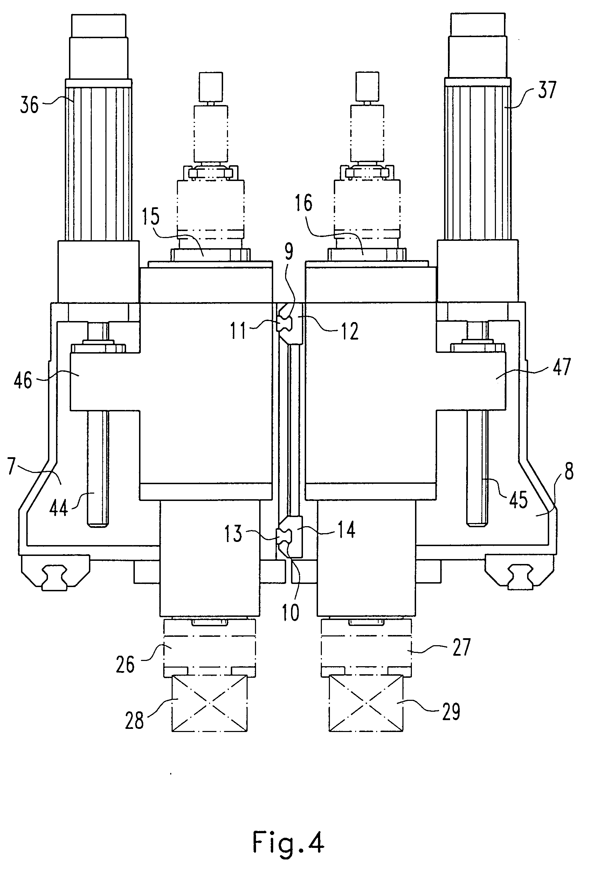

Wie aus den Figuren 1 bis 3 ersichtlich, sind auf einem Grundrahmen 1 ein Maschinengrundkörper 2 und ein die verschiedenen Steuerungselemente und die Energieversorgung aufnehmender Container 40 aufgesetzt, der nachfolgend als Energiecontainer bezeichnet wird. Dieser Energiecontainer umfaßt einen vollständig installierten Schaltschrank mit herausgeführten, vorkonfektionierten Anschlüssen zu den Verbrauchern. Auf dem Maschinengrundkörper 2 sind auf dessen Oberseite zwei Linearführungen 3 und 4 vorgesehen, auf denen mittels Führungswagen 5 und 6 ein aus zwei Teilschlitten 7 und 8 zusammengesetzter Gesamtschlitten in X-Richtung verfahrbar angeordnet ist. Die beiden Teilschlitten 7 und 8 sind gegeneinander mittels Stützführungen 9 und 10 abgestützt, von denen insgesamt vier Abschnitte mit möglichst großem horizontalen und vertikalen Abstand vorgesehen sind. Jeder Abschnitt einer Stützführung umfaßt, wie aus Figur 4 ersichtlich, im oberen Bereich eine Linearführung 11 und einen Führungswagen 12 und im unteren Bereich eine Linearführung 13 und einen Führungswagen 14, wobei die Linearführungen an dem Teilschlitten 7 und die Führungswagen an dem Teilschlitten 8 vorgesehen sind. Jeder Teilschlitten 7 bzw. 8 trägt eine insgesamt mit 15 bzw. 16 bezeichnete Vertikalspindel, die mit ihrem Spindelgehäuse 17 bzw. 18 im oberen Bereich mittels Vertikalführungen 19, 20 bzw. 21, 22 und im unteren Bereich durch hydrostatische Führungen 42 bzw. 41 in Z-Richtung verschiebbar geführt sind. Die Führungen 19 bis 22 sind wie die bisher beschriebenen Führungen als Linearführung 23 mit zugeordnetem Führungswagen 24 ausgebildet, wie dies bei der Führungsanordnung 19 gezeigt ist. Die Spindeln 15 und 16 sind als sogenannte Motorspindeln ausgebildet, die einen fest im Spindelgehäuse 17 bzw. 18 angeordneten Stator und einen unmittelbar auf der Spindelwelle 43 bzw. 25 angeordneten Rotor umfaßen. An den unteren Enden tragen die Spindelwellen 43 bzw. 25 jeweils Spannfutter 26 bzw. 27 zum Erfassen von Werkstücken 28 bzw. 29. Unterhalb der eng nebeneinander angeordneten Spindeln 15 und 16 ist ein gemeinsamer Werkzeugrevolver 30 angeordnet, der, wie aus den Figuren 1 und 2 ersichtlich, um eine Achse 31 drehbar gelagert, in Drehrichtung antreibbar und mit insgesamt 4 Paaren von Werkzeugen ausrüstbar ist, von denen in Figur 2 nur die oberen, untereinander gleichen Werkzeuge mit den Bezugszahlen 32 und 33 versehen sind. Es können auch 8 Paare von Werkzeugen vorgesehen sein. Diese Werkzeuge dienen in der dargestellten Lage mit ihren Schneiden 34 und 35 zur gleichzeitigen Bearbeitung der Werkstücke 28 und 29.

Um diese gleichzeitige Bearbeitung durchführung zu können, ist es erforderlich, daß die Spindeln mit ihren eingespannten Werkstücken sowohl in Z-Richtung als auch in X-Richtung exakt auf die Werkzeugschneiden 34 und 35 eingestellt werden können. Hierfür weist jede Motorspindel 15 bzw. 16 für die Verschiebung in Z-Richtung einen eigenen Antrieb 36 bzw. 37 mit Kugelrollspindel 44 bzw. 45 und Mutter 46 bzw. 47 auf. Jeder Teilschlitten 7 bzw. 8 ist ebenfalls mit einem eigenen Antrieb 38 bzw. 39 versehen. Sowohl die Antriebe 36 und 37 als auch die Antriebe 38 und 39 sind durch eine an sich bekannte und deshalb nicht dargestellte Steuereinrichtung mit GANTRY-Funktion so steuerbar, daß sie im Falle der Antriebe 36 und 37 die Vertikalspindeln entweder gemeinsam synchron oder zur Durchführung einer Korrekturbewegung relativ zueinander in Z-Richtung verschieben können. Im Falle der Antriebe 38 und 39 ist die Steuereinrichtung so ausgebildet, daß die beiden Teilschlitten 7 und 8 entweder gemeinsam synchron oder zur Durchführung einer Korrektureinstellung relativ zueinander in X-Richtung verschoben werden können. Durch diese Korrektureinstellmöglichkeit sowohl in X-Richtung als auch in Z-Richtung ist es möglich, trotz vorhandener Maßtoleranzen bzw. unterschiedlicher Abnutzung von Werkzeugschneiden die Spindeln in X-Richtung und Z-Richtung so einzustellen, daß die Werkstücke 28 und 29 gleiche Einstellungen in bezug auf die Werkzeugschneiden 34 und 35 aufweisen, so daß beide Werkstücke 28 und 29 völlig synchron bearbeitet werden können.

Die GANTRY-Funktion gewährleistet die weg- und/oder winkelsynchrone Bewegung von zwei oder mehr Achsen. Die jeweiligen Werkzeugkorrekturen werden über einen Offset, d.h. einen Weg- und/oder Winkelversatz, zwischen den zu synchronisierenden Achsen berücksichtigt. Bei jedem Einschwenken eines neuen Werkzeugs in die Arbeitsposition müssen die dem Werkzeug zugehörigen Korrekturwerte in X und Z als Offset den jeweiligen Teilschlitten zugeordnet werden, wonach die Teilschlitten absolut synchron arbeiten. Mittels einer in der Zeichnung nicht dargestellten Übernahme- und Wendevorrichtung kann auch das in einer Spindel gehaltene und einseitig bearbeitete Werkstück der benachbarten Spindel übergeben werden, so daß durch diese die Bearbeitung der vorher eingespannten Seite des Werkstückes erfolgen kann. Bei dieser Art der unterschiedlichen Bearbeitung werden die einzelnen Spindeln asynchron in X- und Z-Richtung verfahren, um die notwendigen unterschiedlichen Bearbeitungsvorgänge durchzuführen. Selbstverständlich können auch von vornherein getrennte Bearbeitungen ohne die Übernahme aus der benachbarten Spindel durchgeführt werden.

## Patentansprüche

1. Werkzeugmaschine mit einem Maschinengrundkörper und mehreren Spindeln für die gleichzeitige oder unterschiedliche, getrennte Bearbeitung mehrerer Werkstücke, **dadurch gekennzeichnet,** daß mindestens zwei um ihre Drehachsen antreibbare und in ihre Achsrichtung verfahrbare Spindeln (15, 16) in unmittelbar gegeneinander abgestützten, in einer senkrecht zur Verfahrrichtung der Spindeln stehenden Richtung gemeinsam oder relativ zueinander verfahrbaren, einen Gesamtschlitten bildenden Teilschlitten (7,8) aufgenommen sind und daß nur der Gesamtschlitten durch eine Führungsanordnung auf dem Maschinengrundkörper (2) geführt ist.

2. Werkzeugmaschine nach Anspruch 1, **dadurch gekennzeichnet,** daß die Führungsanordnung für den Gesamtschlitten zwei Linearführungen (3, 4) und zugeordnete Führungswagen (5, 6) aufweist und die Teilschlitten (7, 8) gegeneinander durch in vertikaler Richtung mit Abstand zueinander angeordnete Stützführungen (9, 10) abgestützt sind.

3. Werkzeugmaschine nach Anspruch 1 oder 2, **dadurch gekennzeichnet,** daß die Führungsanordnung für den Gesamtschlitten (7, 8) zwei jeweils den abgewandten Außenseiten des Gesamtschlittens zugeordnete Linearführungen (3, 4) und diesen zugeordnete, am Gesamtschlitten angeordnete Führungswagen (5, 6) umfaßt.

4. Werkzeugmaschine nach Anspruch 2 oder 3, **dadurch gekennzeichnet,** daß die Stützführungen jeweils zwei Linearführungen (11, 13) und diesen zugeordnete Führungswagen (12, 14) umfaßt.

5. Werkzeugmaschine nach einem der Ansprüche 1 bis 4, **dadurch gekennzeichnet,** daß jedem Teilschlitten (7, 8) eine gesonderte Antriebseinheit (38, 39) zugeordnet ist, die über eine Steuereinheit gemeinsam und synchron oder getrennt voneinander ansteuerbar sind.

6. Werkzeugmaschine nach einem der Ansprüche 1 bis 5, **dadurch gekennzeichnet,** daß die Relativverschiebung der Teilschlitten (7, 8) zur Korrektureinstellung in Abhängigkeit von der durch ein Meßsystem festgestellten Maßabweichung zwischen den Spindelachsen und den zugeordneten Werkzeugschneiden (34, 35) erfolgt.

7. Werkzeugmaschine nach einem der Ansprüche 1 bis 6, **dadurch gekennzeichnet,** daß die Spindeln (15, 16) als Motorspindeln ausgebildet sind, bei denen der Rotor unmittelbar auf der Spindelwelle (24, 25) und der Stator im Spindelgehäuse (17, 18) angeordnet ist und daß die Spindeln (15, 16) jeweils einen eigenen Antrieb (36, 37) für das Verfahren in ihrer Achsrichtung aufweisen, wobei eine Steuereinrichtung vorgesehen ist, die ein gemeinsames, synchrones Verfahren beider Spindeln oder eine gegenseitige Relativverschiebung zur Durchführung einer Korrektureinstellung oder einer Zustellbewegung ermöglicht.

8. Werkzeugmaschine nach einem der Ansprüche 1 bis 7, **dadurch gekennzeichnet,** daß die Spindeln ( 15,16) als Vertikalspindeln ausgebildet sind.

9. Werkzeugmaschine nach einem der Ansprüche 1 bis 8, **dadurch gekennzeichnet,** daß die Spindeln (15,16) zur Aufnahme von Werkstücken dienen.

10. Werkzeugmaschine nach einem der Ansprüche 1 bis 8, **dadurch gekennzeichnet,** daß die Spindeln (15,16) zur Aufnahme von Werkzeugen dienen.

11. Werkzeugmaschine nach Ansprüche 9, **dadurch gekennzeichnet,** daß auf dem Maschinengrundkörper (2) zumindest ein Werkzeugträger (30) angeordnet ist.

12. Werkzeugmaschine nach Anspruch 11, **dadurch gekennzeichnet,** daß sämtlichen Spindeln (15,16) ein gemeinsamer, vorzugsweise als Mehrfachrevolver (30) ausgebildeter Werkzeugträger zugeordnet ist.

13. Werkzeugmaschine nach Anspruch 10, **dadurch gekennzeichnet,** daß auf dem Maschinengrundkörper (2) zumindest ein Werkstückträger angeordnet ist.

## Claims

1. Machine tool comprising a machine base and a plurality of spindles for the simultaneous or differing, separate machining of a plurality of workpieces, characterised in that at least two spindles (15, 16) which can be driven about their axes of rotation and are movable in their axial direction are received in mutually supported partial slides (7, 8) movable together or relative to one another in a direction perpendicular to the direction of movement of the spindles and forming a complete slide, and that only the complete slide is guided on the machine base (2) by means of a guide arrangement.

2. Machine tool according to claim 1, characterised in that the guide arrangement for the complete slide has two linear guides (3, 4) and associated guide trucks (5, 6) and the partial slides (7, 8) are supported relative to one another by supporting guides (9, 10) arranged at a distance from one another in the vertical direction.

3. Machine tool according to claim 1 or claim 2, characterised in that the guide arrangement for the complete slide (7, 8) includes two linear guides (3, 4) associated with the remote outer faces of the complete slide and associated guide trucks (5, 6) arranged on the complete slide.

4. Machine tool according to claim 2 or claim 3, characterised in that the supporting guides each include two linear guides (11, 13) and associated guide trucks (12, 14).

5. Machine tool according to one of claims 1 to 4, characterised in that separate drive units (38, 39) which can be controlled jointly and synchronously or separately by means of a control unit are associated with each partial slide (7, 8).

6. Machine tool according to one of claims 1 to 5, characterised in that the relative displacement of the partial slides (7, 8) for the corrective adjustment is effected as a function of the dimensional deviation between the spindle axes and the associated cutting edges (34, 35) determined by a measuring system.

7. Machine tool according to one of claims 1 to 6, characterised in that the spindles (15, 16) are in the form of motor-operated spindles in which the rotor is arranged directly on the spindle shaft (24, 25) and the stator is arranged in the spindle housing (17, 18) and that the spindles (15, 16) each have their own drive (36, 37) for the movement in their axial direction, a control means being provided and allowing for joint synchronous movement of both spindles or mutual relative displacement in order to carry out a corrective adjustment or a feed movement.

8. Machine tool according to one of claims 1 to 7, characterised in that the spindles (15, 16) are in the form of vertical spindles.

9. Machine tool according to one of claims 1 to 8, characterised in that the spindles (15, 16) serve to receive workpieces.

10. Machine tool according to one of claims 1 to 8, characterised in that the spindles (15, 16) serve to receive tools.

11. Machine tool according to claim 9, characterised in that at least one tool holder (30) is arranged on the machine base (2).

12. Machine tool according to claim 11, characterised in that one common tool holder, preferably in the form of a multiple turret (30) is associated with all of the spindles (15, 16).

13. Machine tool according to claim 10, characterised in that at least one work holder is arranged on the machine base (2).

## Revendications

1. Machine-outil avec un bâti principal et plusieurs broches pour l'usinage simultané ou différencié de plusieurs pièces, caractérisée en ce qu'au moins deux broches (15, 16) motorisées selon leur axe de rotation, mobiles selon ce même axe, appuyées directement l'une contre l'autre, et susceptibles d'être déplacées ensemble ou l'une par rapport à l'autre perpendiculairement à l'axe de rotation des broches, forment un chariot principal composé de chariots secondaires (7, 8) et en ce que seul le chariot principal est guidé sur le bâti principal de la machine (2) par un dispositif de guidage.

2. Machine-outil selon la revendication 1, caractérisé en ce que le dispositif de guidage du chariot principal présente deux rails de guidage (3, 4) associés à des glissières de guidage (5, 6), et les chariots secondaires (7, 8) sont en appui les uns sur les autres verticalement au moyen de guides intermédiaires (9, 10) montés avec un espace entre eux.

3. Machine-outil selon la revendication 1 ou 2, caractérisée en ce que le dispositif de guidage du chariot principal (7, 8) comprend également' deux rails de guidage (3, 4) opposés aux faces externes du chariot principal et associés aux glissières de guidage (5, 6) du chariot principal correspondant.

4. Machine-outil selon la revendication 2 ou 3, caractérisée en ce que les guides intermédiaires comprennent deux rails de guidage (11, 13) associés à des glissières de guidage (12, 14).

5. Machine-outil selon l'une des revendications 1 à 4, caractérisée en ce qu'une unité d'entraînement indépendante (38, 39) est associée à chaque chariot secondaire (7, 8), les chariots pouvant être pilotés de façon synchrone ou indépendamment les uns des autres par un module de commande.

6. Machine-outil selon l'une des revendications 1 à 5, caractérisée en ce que le déplacement relatif des chariots secondaires (7, 8) pour les corrections est réalisé en fonction d'un écart effectif entre les axes des broches et les arêtes d'outils (34, 35) associés, déterminé par un système de mesure.

7. Machine-outil selon l'une des revendications 1 à 6, caractérisée en ce que les broches (15, 16) sont motorisées, le rotor étant monté directement sur l'arbre (24, 25) et le stator étant monté dans le boîtier de la broche (17, 18), et en ce que les broches (15, 16) disposent de leur propre dispositif d<entraînement (36, 37) pour leurs déplacements axiaux et où un système de commande est prévu pour assurer un entraînement commun et synchrone des deux broches ou un déplacement relatif de l'une par rapport à l'autre, dans le but de réaliser une correction ou un mouvement d'avance.

8. Une machine-outil selon l'une des revendications 1 à 7, caractérisée en ce que les broches (15, 16) sont de type vertical.

9. Machine-outil selon l'une des revendications 1 à 8, caractérisée en ce que les broches (15, 16) servent au maintien des pièces.

10. Machine-outil selon l'une des revendications 1 à 8, caractérisée en ce que les broches (15, 16) servent au maintien des outils.

11. Machine-outil selon la revendication 9, caractérisée en ce qu'au moins un porte-outils (30) est monté sur le bâti principal (2).

12. Machine-outil selon la revendication 11, caractérisée en ce qu'un porte-outils commun, conçu de préférence sous forme d'une tête revolver (30), est partagé par l'ensemble des broches (15, 16).

13. Machine-outil selon la revendication 10, caractérisée en ce qu'au moins un porte-pièce est monté sur le bâti principal (2).
